# EUROPÄISCHE PATENTSCHRIFT

(11) **EP 2 987 184 B1**
(45) Veröffentlichungstag und Bekanntmachung des Hinweises auf die Patenterteilung: **21.06.2017**
(21) Anmeldenummer: 14716298.6
(22) Anmeldetag: 08.04.2014
(51) Int. Cl.: H01L 31/042, H01L 31/18

(54) **SELBSTREINIGENDES PV-MODUL UND VERFAHREN ZUR REINIGUNG VON PV-MODULEN**
SELF-CLEANING PV MODULE AND METHOD FOR CLEANING PV MODULES
MODULE PHOTOVOLTAÏQUE AUTONETTOYANT ET PROCÉDÉ POUR NETTOYER DES MODULES PHOTOVOLTAÏQUES

(30) Priorität: 16.04.2013 DE 102013206871
(43) Veröffentlichungstag der Anmeldung: 24.02.2016
(73) Patentinhaber: FRAUNHOFER-GESELLSCHAFT zur Förderung der angewandten Forschung e.V., 80636 München (DE)
(72) Erfinder: WIRTH, Harry, 79249 Merzhausen (DE)
(74) Vertreter: Pfenning, Meinig & Partner mbB
(86) Internationale Anmeldenummer: PCT/EP2014/057046
(87) Internationale Veröffentlichungsnummer: WO 2014/170171

(56) Entgegenhaltungen:
- US-A1- 2010 307 479
- US-A1- 2012 285 516
- WILLIAMS R B ET AL: "Vibration characterization of self-cleaning solar panels with piezoceramic actuation", COLLECTION OF TECHNICAL PAPERS - AIAA/ASME/ASCE/AHS STRUCTURES,STRUCTURAL DYNAMICS AND MATERIALS CONFERENCE, AIAA, WASHINGTON, DC, US, Bd. 1, 1. Januar 2007 (2007-01-01), Seiten 512-520, XP008159210, ISSN: 0273-4508, DOI: 10.2514/6.2007-1746

## Beschreibung

Die Erfindung betrifft ein selbstreinigendes Photovoltaik (PV)-Modul, das mindestens eine Trägerplatte mit einer aktiven, mit Solarzellen versehenen Fläche sowie mindestens eine Fixierungsstruktur aufweist, sowie ein Verfahren zur Reinigung von PV-Modulen unter Ausnutzung von Vibrationen, insbesondere ausgelöst durch Wind.

Photovoltaische Module bestehen in der Regel aus mindestens einer steifen Platte, meistens Glas, die eine aktive Schicht Solarzellen als Super- oder Substrat trägt, aus weiteren Schichten, die v.a. der Einkapselung dienen, und weiteren Elementen. Häufig wird die Platte durch einen umlaufenden Rahmen oder durch rückseitig aufgebrachte Schienen ausgesteift. Wenn diese aussteifenden Elemente vorhanden sind, werden sie zur Fixierung des Moduls an die Unterkonstruktion genutzt. Die Fixierpunkte liegen aus statischen Gründen in einiger Entfernung von der kurzen Modulkante. Sie leiten Kräfte (Eigengewicht, Wind, Schnee) in die Unterkonstruktion. Der Übergang von Platte zu Aussteifung (meist geklebt) und von Aussteifung zu Unterkonstruktion (meist geschraubt) werden als starre Verbindungen ausgeführt.

Photovoltaische (PV) Module sind an vielen sonnenreichen, aber regenarmen Standorten einer starken Verschmutzung, insbesondere durch Ablagerung (Soiling) von Sand, Staub und Meersalzaerosolen ausgesetzt, (Renewable and Sustainable Energy Reviews 14 (2010) 3124-3131, Prog. Photovolt: Res. Appl. 2011; 19:211-217). Wenn eine regelmäßige Reinigung ausbleibt, können bereits nach wenigen Wochen Ertragseinbußen von 50% und mehr auftreten. Besonders kritisch ist die Kombination von Ablagerung und nächtlicher Betauung, weil dadurch stabile Schichten entstehen, die sich durch Wind nicht mehr wirksam abtragen lassen.

Für betroffene Gebiete wird eine häufige mechanische oder pneumatische Reinigung der Module empfohlen, bis hin zur täglichen Reinigung. Um die Haftung von Ablagerungen auf Moduloberflächen zu reduzieren, wurden verschiedene Anti-Soiling-Beschichtungen für Glasoberflächen vorgeschlagen. Diese Beschichtungen haben jedoch keinen Einfluss auf die Temperatur- und Tauproblematik, sondern sie verändern lediglich die Oberflächenenergie hin zu sehr kleinen (hydrophob) oder sehr großen Werten (hydrophil).

Die WO/2012/028712 A2, US 2004/0055632 A1 und US 6,911,593 B2 beschreiben eine Reinigung der Moduloberfläche durch elektrische Felder.

Die US 2010/0307479 A1 offenbart ein Verfahren und eine Vorrichtung, bei dem ein Photovoltaik-Modul enthaltend mindestens eine Trägerplatte mit einer aktiven, mit Solarzellen versehenen Fläche mit einer Fixierungsstruktur über Verbindungselemente so fixiert wird bzw. ist, dass Punkte in der Ebene der aktiven Fläche in zur Ebene senkrechter z-Richtung beweglich sind und ein Abtrag von Ablagerungen auf der aktiven Fläche erfolgen kann.

Ausgehend hiervon war es Aufgabe der vorliegenden Erfindung, ein photovoltaisches Modul bereitzustellen, die die Anlagerung von Schmutz aus der Umgebungsluft im wesentlichen vermeidet, sodass eine aufwendige mechanische Reinigung der photovoltaischen Module vermieden werden können.

Diese Aufgabe wird durch wird durch das Photovoltaik-Modul mit den Merkmalen des Anspruchs 1 und das Verfahren zur Reinigung von Photovoltaik-Modulen mit den Merkmalen des Anspruchs 10 gelöst. Die weiteren abhängigen Ansprüchen zeigen vorteilhafte Weiterbildungen auf.

Erfindungsgemäß wird ein selbstreinigendes Photovoltaik-(PV)-Modul bereit gestellt, das mindestens eine Trägerplatte mit einer aktiven, mit Solarzellen versehenen Fläche sowie mindestens eine Fixierungsstruktur aufweist. Die Trägerplatte ist dabei über Verbindungselemente an der Fixierungsstruktur befestigt.

Wesentliches Merkmal des erfindungsgemäßen PV-Moduls ist dabei, dass jeder Punkt in der durch die aktive Fläche aufgespannten Ebene in der zu dieser Ebene senkrechten Richtung (z-Richtung) beweglich ist. Die Bewegung wird durch federnde, dämpfende und/oder begrenzende Elemente auf ein sinnvolles Maß eingeschränkt.

Die erfindungsgemäße Beweglichkeit in der z-Richtung ermöglicht insbesondere eine Vibration der aktiven Fläche, wodurch die Ablagerung von Schmutz aus der Umgebungsluft drastisch reduziert werden kann bzw. bereits abgelagerter Schmutz abgetragen werden kann.

Unter Beweglichkeit in z-Richtung ist im Rahmen der vorliegenden Erfindung zu verstehen, dass diese Beweglichkeit auf eine bestimmte Distanz limitiert ist, die beispielsweise durch Anschläge o.ä. festgelegt werden kann.

Eine erfindungsgemäße Ausführungsform sieht vor, dass die aktive Fläche, d.h. die mit den Solarzellen versehene Fläche des PV-Moduls frei von festgelagerten Punkten in der Ebene der aktiven Fläche ist. Durch die erfindungsgemäße freie Lagerung der aktiven Fläche ist es möglich, dass durch Vibrationen, z.B. durch Windeinfluss, niederfrequente Eigenschwingungsmoden des PV-Moduls angeregt werden.

Eine erfindungsgemäße Ausführungsform des PV-Moduls sieht vor, dass die Verbindungselemente in der Ebene des PV-Moduls außerhalb der aktiven Fläche angeordnet sind. Die Verbindungselemente sind dabei vorzugsweise in einem Abstand von mindestens 20 mm zur aktiven Fläche angeordnet.

Eine weitere erfindungsgemäße Ausführungsform sieht vor, dass die Verbindungselemente zwischen Trägerplatte und Fixierungsstruktur eine Drehbewegung zulassen, sodass durch Vibration, insbesondere Windeinfluss, in definierten Grenzen eine Auslenkung des PV-Moduls ermöglicht wird. Hierfür dienen insbesondere Drehlager oder Drehgelenke.

Erfindungsgemäß ist, dass die Verbindungselemente eine translatorische Bewegung in z-Richtung oder in einem Winkel < 90° zur Trägerplatte zulassen. Die translatorische Bewegung ist dabei mittels eines Anschlages auf einen Bereich kleiner 50 mm, bevorzugt kleiner 10 mm, beschränkt.

Vorzugsweise weist die Fixierungsstruktur mindestens einen außerhalb der aktiven Fläche angeordneten Rahmen und/oder mindestens eine Schiene auf. Die Schienen können hierbei auf der der aktiven Fläche abgewandten Seite des PV-Moduls angeordnet sein. Es ist weiter bevorzugt, dass die Trägerplatte aus Glas besteht.

Eine weitere erfindungsgemäße Ausführungsform sieht vor, dass das PV-Modul mit einem Abschirmungselement gekoppelt ist, wobei das Abschirmungselement einen Transmissionsgrad von ≤ 90 % im Bereich der thermischen Strahlung im Wellenlängenbereich von 3-20 µm aufweist, das die thermische Abstrahlung des PV-Moduls an mindestens einer Oberfläche des PV-Moduls reduziert.

Vorzugsweise weist das Abschirmungselement einen Transmissionsgrad ≤ 50%, bevorzugt ≤ 15% auf.

Weiterhin ist es wichtig, dass das Abschirmungselement - im Fall einer Anordnung auf der Empfangsfläche des Moduls - eine hohe Transmission der Solarstrahlung zulässt. Hierbei ist es bevorzugt, dass das Abschirmungselement einen mittleren Transmissionsgrad im Wellenlängenbereich von 380 nm bis 1200 nm von mindestens 80%, besonders bevorzugt mindestens 90% aufweist.

Das Abschirmungselement kann vorzugsweise eine Platte, Folie und/oder Beschichtung sein. Im Falle einer Beschichtung werden bevorzugt gesputterte, pyrolisierte oder aufgedampfte Schichten eingesetzt. Besonders bevorzugt sind hierbei sogenannte Low-E-Schichten, die einen geringen Emissionsgrad aufweisen. Das Abschirmungselement enthält dabei vorzugsweise metallische Anteile bzw. enthält Metallverbindungen. Besonders bevorzugt enthält das Abschirmungselement Silber oder Zinn in metallischer Form oder in Form einer Verbindung. Vorzugsweise wird die Beschichtung auf der Rückseite und/oder Vorderseite des PV-Moduls abgeschieden.

Wenn das Abschirmungselement eine Platte ist, werden hierbei vorzugsweise Platten mit einem Wärmedurchlasskoeffizienten von maximal 500 W/m²K, besonders bevorzugt maximal 50 W/m²K eingesetzt.

In einer bevorzugten Ausführungsform ist die Platte zum PV-Modul beabstandet, wobei der Abstand zwischen Platte und PV-Modul bevorzugt mindestens 1 cm, besonders bevorzugt mindestens 3 cm, beträgt. Der maximale Abstand beträgt bevorzugt 50 cm.

Vorzugsweise ist die Platte zusammen mit dem PV-Modul drehbar gelagert.

Eine weitere bevorzugte Variante sieht vor, dass die Platte mit einer Beschichtung versehen ist, die einen niedrigen Emissionsgrad im Bereich der thermischen Strahlung im Wellenlängenbereich von 3 bis 20 µm aufweist. Bei dieser Beschichtung handelt es sich vorzugsweise um eine Low-E-Schicht.

Erfindungsgemäß wird ebenso ein Verfahren zur Reinigung von PV-Modulen bereit gestellt, bei dem ein Photovoltaik (PV)-Modul enthaltend mindestens eine Trägerplatte mit einer aktiven, mit Solarzellen versehenen Fläche mit mindestens einer Fixierungsstruktur über Verbindungselemente so fixiert wird, dass jeder Punkt in der Ebene der aktiven Fläche in zur Ebene senkrechter z-Richtung beweglich ist und durch Windeinfluss die aktive Fläche in Schwingung versetzt wird und so ein Abtrag von Ablagerungen auf der aktiven Fläche erfolgt.

Vorzugsweise sind die Verbindungselemente in der Ebene des PV-Moduls außerhalb der aktiven Fläche angeordnet, wobei der Abstand zur aktiven Fläche vorzugsweise mindestens 20 mm beträgt.

Durch den Einfluss von Vibration, insbesondere durch Wind, können vorzugsweise niederfrequente Eigenschwingungsmoden des PV-Moduls angeregt werden, sodass eine Ablagerung von Schmutz auf der aktiven Fläche im Wesentlichen verhindert werden kann oder dass sich auf der aktiven Fläche befindliche Ablagerungen von Schmutz durch die Vibration, insbesondere Wind, wieder gelöst und abgetragen werden können.

Eine bevorzugte Variante des Verfahrens sieht vor, dass durch eine Drehbewegung der Verbindungselemente eine translatorische Bewegung der Trägerplatte ermöglicht wird.

Das erfindungsgemäße Verfahren sieht vor, dass durch die Verbindungselemente eine translatorische Bewegung der Trägerplatte in z-Richtung oder in einem Winkel < 90° zur Trägerplatte ermöglicht wird. Das PV-Modul wird dann durch Windeinfluss in im Wesentlichen zur Ebene des PV-Moduls senkrechter z-Richtung bis zu einem Anschlag bewegt und fällt anschließend aufgrund des Eigengewichtes des PV-Moduls in die Ausgangsposition oder aufgrund federnder Elemente zurück.

Eine weitere Variante des erfindungsgemäßen Verfahrens sieht vor, dass das PV-Modul mit einem Abschirmungselement gekoppelt ist, wobei das Abschirmungselement einen Transmissionsgrad von ≤ 90% im Bereich der thermischen Strahlung im Wellenlängenbereich von 3 bis 20 µm aufweist, so kombiniert wird, dass die Wärmeabstrahlung des PV-Moduls gegenüber der Umgebung so reduziert wird, dass im wesentlichen keine Betauung des PV-Moduls auftritt.

Anhand der nachfolgenden Figuren soll der erfindungsgemäße Gegenstand näher erläutert werden, ohne diesen auf die hier gezeigten spezifischen Ausführungsformen einschränken zu wollen.
Fig. 1 zeigt PV-Module, wie sie aus dem Stand der Technik bekannt sind.
Fig. 2 zeigt erfindungsgemäße PV-Module.
Fig. 3 zeigt ein erfindungsgemäßes PV-Modul mit translatorischer Beweglichkeit.
Fig. 4 zeigt ein erfindungsgemäßes PV-Modul, das eine translatorische Bewegung aufgrund drehbarer Lagerung in den Befestigungspunkten zulässt.

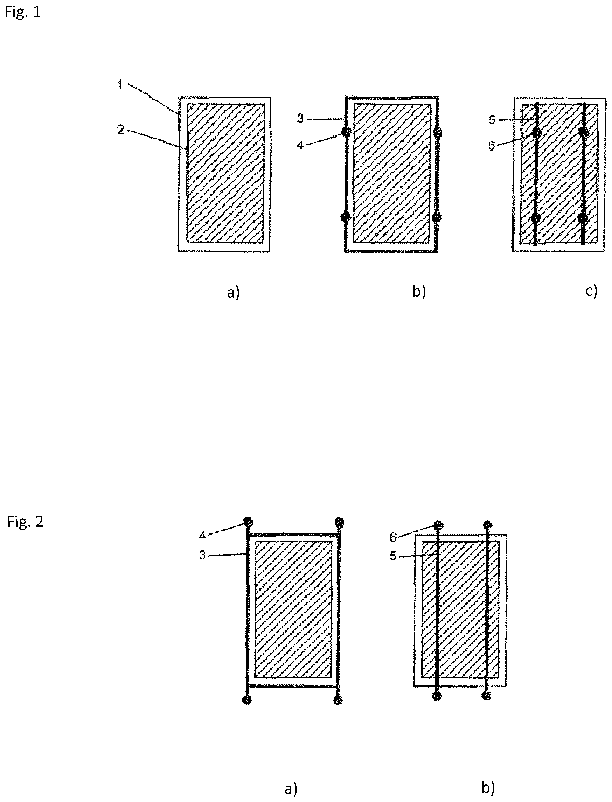

In Fig. 1a ist ein PV-Modul mit einer steifen Trägerplatte 1, in der Regel aus Glas, sowie einer aktiven Schicht mit Solarzellen 2 als Super- oder Substrat dargestellt. Fig. 1b und 1c zeigen Fixierungsmöglichkeiten für diese aus dem Stand der Technik bekannten PV-Module. In Fig. 1b weist das PV-Modul einen die aktive Fläche umlaufenden Rahmen 3 auf, der vier Fixierpunkte 4 aufweist. Die zur Fixierung des Moduls an einer Unterkonstruktion (hier nicht dargestellt) befestigt sind. Die Fixierpunkte liegen aus statischen Gründen in einiger Entfernung von der kurzen Kante des PV-Moduls. Sie leiten Kräfte, z.B. Eigengewicht, Wind oder Schnee in die Unterkonstruktion. Der Übergang von der Trägerplatte 1 zur Aussteifung, der meist geklebt ist, und von der Aussteifung zur Unterkonstruktion, der meist geschraubt ist, werden als starre Verbindung ausgeführt. Dies hat zur Folge, dass die Trägerplatte kein Eigenschwingverhalten entwickeln kann, das durch Wind angeregt wird, und das eine Bewegung an allen Stellen der aktiven Fläche ermöglicht. In Fig. 1c weist die Trägerplatte 1 rückseitig Schienen 5 mit jeweiligen Fixierpunkten 6 auf.

In Fig. 2 sind erfindungsgemäße Abwandlungen der Systeme aus dem Stand der Technik gemäß Fig. 1b und Fig. 1c dargestellt. In Fig. 2a ist ein PV-Modul mit umlaufenden Rahmen 3 dargestellt, wobei hier die Fixierpunkte 4 in einem Abstand von etwa 20 mm von der aktiven Fläche angeordnet sind. In Fig. 2b ist die Variante mit Schienen 5 so abgewandelt, dass auch hier die Fixierpunkte 6 mit gewissem Abstand vom oberen bzw. unteren Rand des PV-Moduls angeordnet sind.

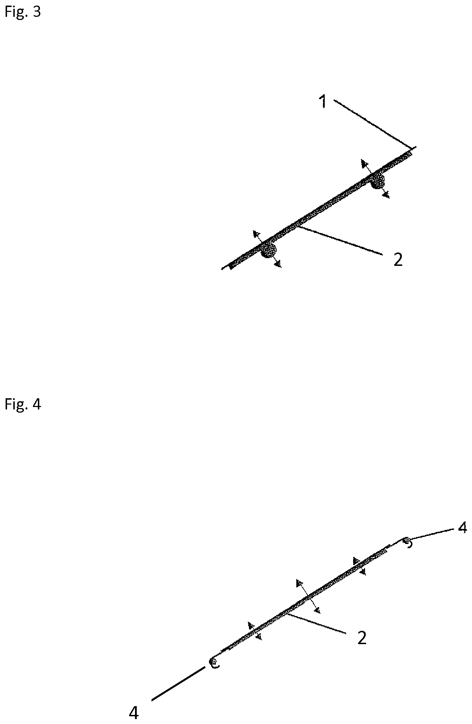

In Fig. 3 ist eine Variante des erfindungsgemäßen PV-Moduls im Querschnitt dargestellt. Mindestens ein Fixierpunkt erlaubt hier einen begrenzten translatorischen Spielraum, z.B. in der Größenordnung von 1 bis 10 mm senkrecht oder schräg zur Plattenfläche. Falls alle Fixierungen diesen translatorischen Spielraum aufweisen, kann Wind die Module leicht anheben, beim oberen Anschlag und beim Rückfall in die Ausgangsposition entsteht eine stoßartige Abbremsung der Bewegung, die die Ablösung von Ablagerungen fördert. Fixierungen des beschriebenen Typs können auch an weiteren Kanten des Moduls vorgesehen werden, beispielsweise nahe der Mitte der Kantenlänge. Sie begrenzen dort die Durchbiegung unter Last und erzeugen einen kontrollierten Anschlag.

In Fig. 4 ist eine erfindungsgemäße Variante des PV-Moduls im Querschnitt dargestellt, wobei zwei Fixierpunkte 4 in einer Entfernung von (mindestens) 20 mm von der aktiven Fläche 2 angeordnet sind. Wenn sämtliche Fixierungen an der Unterkonstruktion derart ausgestaltet sind, kann Wind die Platten zur Schwingung anregen, wobei sich in der ersten Eigenschwingungsmode die gesamte aktive Fläche des Moduls senkrecht zur Zeichenebene bewegt, mit dem Schwingungsbauch nahe des Zentrums der aktiven Fläche. An diesem mindestens einen Fixierpunkt kann zusätzlich ein translatorischer Spielraum vorgesehen werden, der über einen Anschlag begrenzt wird. Weiterhin ist ein Fixierpunkt mit einem Drehlager ausgestattet, der die Schwingung des Moduls erleichtert.

## Patentansprüche

1. Selbstreinigendes Photovoltaik (PV)-Modul enthaltend mindestens eine Trägerplatte (1) mit einer aktiven, mit Solarzellen versehenen Fläche (2) sowie mindestens einer Fixierungsstruktur (3, 5), die mit der Trägerplatte (1) über Verbindungselemente verbunden ist, wobei jeder Punkt in der durch das PV-Modul aufgespannten Ebene der aktiven Fläche (2) in zu dieser Ebene senkrechter Richtung (z-Richtung) beweglich ist,
**dadurch gekennzeichnet, dass** die Verbindungselemente eine translatorische Bewegung in z-Richtung oder in einem Winkel < 90° zur Trägerplatte (1) zulassen und die translatorische Bewegung durch mindestens einen Anschlag auf einen Bereich von kleiner 50 mm beschränkt wird.

2. PV-Modul nach Anspruch 1, **dadurch gekennzeichnet, dass** die aktive Fläche (2) frei von festgelagerten Punkten ist.

3. PV-Modul nach einem der vorhergehenden Ansprüche, **dadurch gekennzeichnet, dass** die Verbindungselemente in der Ebene des PV-Moduls außerhalb der aktiven Fläche (2) angeordnet sind, insbesondere in einem Abstand zur aktiven Fläche von mindestens 20 mm.

4. PV-Modul nach dem vorhergehenden Anspruch, **dadurch gekennzeichnet, dass** die translatorische Bewegung durch den mindestens einen Anschlag auf einen Bereich von kleiner 10 mm beschränkt wird.

5. PV-Modul nach einem der vorhergehenden Ansprüche, **dadurch gekennzeichnet, dass** die Fixierungsstruktur mindestens einen Rahmen (3) und/oder mindestens eine Schiene (5) aufweist.

6. PV-Modul nach einem der vorhergehenden Ansprüche, **dadurch gekennzeichnet, dass** die Trägerplatte (1) aus Glas besteht.

7. PV-Modul nach einem der vorhergehenden Ansprüche, **dadurch gekennzeichnet, dass** das PV-Modul mit einem Abschirmungselement gekoppelt ist, wobei das Abschirmungselement einen Transmissionsgrad von ≤ 90 % im Bereich der thermischen Strahlung im Wellenlängenbereich von 3-20 µm aufweist, das die thermische Abstrahlung des PV-Moduls an mindestens einer Oberfläche des PV-Moduls reduziert.

8. PV-Modul nach einem der vorhergehenden Ansprüche, **dadurch gekennzeichnet, dass** das Abschirmungselement eine Platte, eine Folie und/oder eine Beschichtung, bevorzugt eine gesputterte, pyrolisierte oder aufgedampfte Schicht, besonders bevorzugt eine Low-E-Schicht ist, wobei das Material des Abschirmungselementes bevorzugt metallische Anteile oder deren Verbindungen enthält, insbesondere Silber oder Zinn.

9. PV-Modul nach dem vorhergehenden Anspruch, **dadurch gekennzeichnet, dass** die Platte zum PV-Modul beabstandet ist und die Platte zusammen mit dem PV-Modul bewegbar ist, wobei der Abstand zwischen Platte und PV-Modul bevorzugt mindestens 1 cm, besonders bevorzugt mindestens 3 cm beträgt.

10. Verfahren zur Reinigung von PV-Modulen, bei dem ein Photovoltaik (PV)-Modul enthaltend mindestens eine Trägerplatte (1) mit einer aktiven, mit Solarzellen versehenen Fläche (2) mit mindestens einer Fixierungsstruktur (3, 5) über Verbindungselemente so fixiert wird, dass jeder Punkt in der Ebene der aktiven Fläche (2) in zur Ebene senkrechter z-Richtung frei beweglich ist und durch Windeinfluss die aktive Fläche in Bewegung und/oder Schwingung versetzt wird und so ein Abtrag von Ablagerungen auf der aktiven Fläche erfolgt,
**dadurch gekennzeichnet, dass** durch die Verbindungselemente eine translatorische Bewegung der Trägerplatte (1) in z-Richtung oder in einem Winkel < 90° zur Trägerplatte ermöglicht wird und das PV-Modul durch Windeinfluss in im Wesentlichen zur Ebene des PV-Moduls senkrechter z-Richtung bis zu einem Anschlag bewegt wird und anschließend aufgrund federnder Elemente und/oder des Eigengewichts des PV-Moduls in die Ausgangsposition zurückfällt.

11. Verfahren nach Anspruch 10, **dadurch gekennzeichnet, dass** die Verbindungselemente in der Ebene des PV-Moduls außerhalb der aktiven Fläche (2) angeordnet sind, insbesondere in einem Abstand zur aktiven Fläche von mindestens 20 mm.

12. Verfahren nach einem der Ansprüche 10 oder 11, **dadurch gekennzeichnet, dass** durch den Windeinfluss niederfrequente Eigenschwingungsmoden des PV-Moduls angeregt werden.

## Claims

1. A self-cleaning photovoltaic (PV) module containing at least one support plate (1) with an active surface (2) provided with solar cells, and also at least one fixing structure (3, 5) which is connected to the support plate (1) via connecting elements, wherein each point in the plane of the active surface (2) which is spanned by the PV module is movable in a direction (z direction) perpendicular to this plane,
**characterised in that** the connecting elements permit a translatory movement in the z direction or at an angle of < 90° to the support plate (1), and the translatory movement is restricted to a region of less than 50 mm by at least one stop.

2. A PV module according to Claim 1, **characterised in that** the active surface (2) is free from fixed points.

3. A PV module according to one of the preceding claims, **characterised in that** the connecting elements are arranged in the plane of the PV module outside the active surface (2), in particular at a distance from the active surface of at least 20 mm.

4. A PV module according to the preceding claim, **characterised in that** the translatory movement is restricted to a region of less than 10 mm by the at least one stop.

5. A PV module according to one of the preceding claims, **characterised in that** the fixing structure has at least one frame (3) and/or at least one rail (5).

6. A PV module according to one of the preceding claims, **characterised in that** the support plate (1) consists of glass.

7. A PV module according to one of the preceding claims, **characterised in that** the PV module is coupled with a screening element, the screening element having a transmittance of ≤ 90% in the region of the thermal radiation in the wavelength range of 3-20 µm which reduces the thermal radiation of the PV module on at least one surface of the PV module.

8. A PV module according to one of the preceding claims, **characterised in that** the screening element is a plate, a film and/or a coating, preferably a sputtered, pyrolysed or vapour-deposited layer, particularly preferably a low-E layer, the material of the screening element preferably containing metallic portions or compounds thereof, in particular silver or tin.

9. A PV module according to the preceding claim, **characterised in that** the plate is spaced apart from the PV module and the plate is movable together with the PV module, the distance between the plate and the PV module preferably being at least 1 cm, particularly preferably at least 3 cm.

10. A method for cleaning PV modules, in which a photovoltaic (PV) module containing at least one support plate (1) with an active surface (2) provided with solar cells, with at least one fixing structure (3, 5) is fixed via connecting elements such that each point in the plane of the active surface (2) is freely movable in a z direction perpendicular to the plane, and the active surface is caused to move and/or oscillate by the influence of wind and thus removal of deposits on the active surface takes place,
**characterised in that** the connecting elements permit a translatory movement of the support plate (1) in the z direction or at an angle of < 90° to the support plate and the PV module is moved as far as a stop by the influence of wind in a z direction substantially perpendicular to the plane of the PV module, and then falls back into the starting position because of resilient elements and/or the dead weight of the PV module.

11. A method according to Claim 10, **characterised in that** the connecting elements are arranged in the plane of the PV module outside the active surface (2), in particular at a distance from the active surface of at least 20 mm.

12. A method according to one of Claims 10 or 11, **characterised in that** low-frequency natural vibration modes of the PV module are excited by the influence of wind.

## Revendications

1. Module photovoltaïque (PV) auto-nettoyant contenant au moins une plaque de support (1) avec une surface (2) active munie de cellules photovoltaïques ainsi qu'au moins une structure de fixation (3, 5) reliée à la plaque de support (1) par l'intermédiaire d'éléments de liaison, chaque point étant mobile dans le plan de la surface active (2) formé par le module PV dans une direction (direction z) perpendiculaire à ce plan,
**caractérisé en ce que** les éléments de liaison permettent un mouvement de translation dans la direction z ou avec un angle < 90° par rapport à la plaque de support (1) et le mouvement de translation est limité par au moins une butée à une zone inférieure à 50 mm.

2. Module PV selon la revendication 1, **caractérisé en ce que** la surface active (2) est exempte de points fixes.

3. Module PV selon l'une des revendications précédentes, **caractérisé en ce que** les éléments de liaison sont disposés dans le plan du module PV à l'extérieur de la surface active (2), plus particulièrement à une distance d'au moins 20 mm de la surface active.

4. Module PV selon la revendication précédente, **caractérisé en ce que** le mouvement de translation est limité par l'au moins une butée à une zone inférieure à 10 mm.

5. Module PV selon l'une des revendications précédentes, **caractérisé en ce que** la structure de fixation comprend au moins un cadre (3) et/ou au moins un rail (5).

6. Module PV selon l'une des revendications précédentes, **caractérisé en ce que** la plaque de support (1) est constituée de verre.

7. Module PV selon l'une des revendications précédentes, **caractérisé en ce que** le module PV est couplé avec un élément de blindage, l'élément de blindage présentant un taux de transmission ≤ 90 % au niveau du rayonnement thermique dans une plage de longueurs d'ondes de 3 à 20 µm, qui réduit l'émission thermique du module PV sur au moins une surface du module PV.

8. Module PV selon l'une des revendications précédentes, **caractérisé en ce que** l'élément de blindage est une plaque, un film et/ou un revêtement, de préférence une couche pulvérisée, pyrolysée ou déposée en phase vapeur, plus particulièrement de préférence une couche Low-E, le matériau de l'élément de blindage contenant de préférence des composants métalliques ou leurs composés, plus particulièrement de l'argent ou de l'étain.

9. Module PV selon la revendication précédente, **caractérisé en ce que** la plaque est écartée du module PV et la plaque est mobile conjointement avec le module PV, la distance entre la plaque et le module PV étant de préférence égale à au moins 1 cm, plus particulièrement de préférence d'au moins 3 cm.

10. Procédé de nettoyage de modules PV, dans lequel un module photovoltaïque (PV) contenant au moins une plaque de support (1) avec une surface active (2) munie de cellules photovoltaïques, est fixée avec au moins une structure de fixation (3, 5) par l'intermédiaire d'éléments de liaison, de façon à ce que chaque point du plan de la surface active (2) soit mobile librement dans une direction z perpendiculaire au plan et, du fait de l'action du vent, la surface active soit mise en mouvement et/ou en oscillation et un enlèvement de dépôts sur la surface active a ainsi lieu,
**caractérisé en ce que** les éléments de liaison permettent un mouvement de translation de la plaque de support (1) dans la direction z ou avec un angle < 90° par rapport à la plaque de support et le module PV est déplacé du fait de l'action du vent dans une direction z globalement perpendiculaire au plan du module PV puis retombe vers la position de départ du fait d'éléments d'amortissement et/ou du poids propre du module PV.

11. Procédé selon la revendication 10, **caractérisé en ce que** les éléments de liaison sont disposés dans le plan du module PV à l'extérieur de la surface active (2), plus particulièrement à une distance d'au moins 20 mm de la surface active.

12. Procédé selon l'une des revendications 10 ou 11, **caractérisé en ce que** l'action du vent suscite des modes d'oscillation propre aux basses fréquences du module PV.
